(19)

Europäisches
Patentamt
European
Patent Office
Office européen
des brevets

(11) **EP 3 324 333 A2**

(12) **EUROPEAN PATENT APPLICATION**

(43) Date of publication:
**23.05.2018 Bulletin 2018/21**

(51) Int Cl.:
**G06K 9/00** (2006.01)

(21) Application number: **17187179.1**

(22) Date of filing: **22.08.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **21.11.2016 KR 20160155295**

(71) Applicant: **Samsung Electronics Co., Ltd.
Gyeonggi-do 16677 (KR)**

(72) Inventors:
• **Yoo, Byungin
16678 Gyeonggi-do (KR)**

• **Kwak, Youngjun
16678 Gyeonggi-do (KR)**
• **Kim, Youngsung
16678 Gyeonggi-do (KR)**
• **Rhee, Seonmin
16678 Gyeonggi-do (KR)**
• **Choi, Chang Kyu
16678 Gyeonggi-do (KR)**

(74) Representative: **Land, Addick Adrianus Gosling et al
Arnold & Siedsma
Bezuidenhoutseweg 57
2594 AC The Hague (NL)**

(54) **METHOD AND APPARATUS TO PERFORM FACIAL EXPRESSION RECOGNITION AND TRAINING**

(57) A facial expression recognition method includes actuating a processor to acquire an input image including an object; and identifying a facial expression intensity of the object from the input image based on a facial expression recognition model.

**FIG. 14**

1400

**Description**

This application claims the benefit under 35 USC § 119(a) of Korean Patent Application No. 10-2016-0155295 filed on November 21, 2016, in the Korean Intellectual Property Office, the entire disclosure of which is incorporated herein by reference for all purposes.

The following description relates to technology associated with facial expression recognition and training.

Recently, to classify a human input pattern, active research on applications of an efficient pattern recognition method of a human to an actual computer have been conducted. One such area of research is focused on an artificial neural network that models characteristics of biological nerve cells of a human through generated relationships. To classify the input pattern, the artificial neural network employs a selection of algorithms that approximate and simulate a learning capability of a human. Through these algorithms, the artificial neural network generates mapping between the input pattern and output patterns. The capability of generating such a mapping is referred to as a learning capability of the artificial neural network. Based on the learning result, the artificial neural network generates an output with respect to an input pattern to be used for learning towards continuous refinement of the recognition of real-world objects.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, there is provided a facial expression recognition method including actuating a processor to acquire an input image including an object, and identifying a facial expression intensity of the object from the input image based on a facial expression recognition model.

The calculating may include identifying a facial expression intensity with respect to each of a plurality of facial expressions from the input image based on the facial expression recognition model.

The calculating may include further identifying at least one of a facial expression of the object or a pose of the object from the input image based on the facial expression recognition model.

The method may further include detecting an object region corresponding to the object from the input image, and normalizing the object region, and the identifying may include calculating the facial expression intensity of the object from the normalized object region based on the facial expression recognition model.

The method may further include determining feedback information based on the facial expression intensity of the object, and providing the determined feedback information to a user.

The determining may include searching for content corresponding to an emotion identified based on a facial expression of the object among a plurality of items of content, and providing content having an emotion level corresponding to the facial expression intensity among the found content.

The acquiring may include collecting frame images, and the method may further include selecting, from the frame images, facial expression images of consecutive frames from a first frame image identified as a neutral facial expression and a second frame image identified as one of a plurality of facial expressions, and updating the facial expression recognition model based on the selected facial expression images.

The selecting may include determining a frame image having a substantially maximum facial expression intensity, among the frame images, as the second frame image, and the updating may include mapping a facial expression intensity to each of the facial expression images based on a total number of the facial expression images and a frame order of each of the facial expression images, and updating the facial expression recognition model to output a facial expression intensity mapped to a corresponding facial expression image from each of the facial expression images.

The updating may include identifying user information corresponding to the object, and updating the facial expression recognition model for each item of the identified user information.

In another general aspect, there is also provided a facial expression recognition training method, the method including generating a synthetic image from an original image, wherein the synthetic image is generated to have a facial expression intensity different from a facial expression intensity of the original image, and training a facial expression recognition model based on training data including the original image and the synthetic image.

The generating may include extracting texture information from the original image, and generating the synthetic image by synthesizing the extracted texture information with an object shape model corresponding to the facial expression intensity of the synthetic image.

The generating may further include transformatively morphing an object shape model having a default facial expression intensity based on a designated facial expression intensity.

The generating may further include morphing an object shape model having a default pose based on a designated pose.

The generating may include generating the training data by mapping a first facial expression intensity corresponding to the original image as a training output with respect to the original image, and mapping a second facial expression intensity corresponding to the synthetic image as a training output with respect to the synthetic image.

The generating may include acquiring a series of images as the original image, the series of images including a plurality of consecutive frame images associated with a single facial expression, and determining a facial expression intensity with respect to a corresponding frame image based on a total number of frames of the series of images and a frame order of each frame image of the series of images.

The generating may further include generating a synthetic image having a facial expression intensity between facial expression intensities mapped to two adjacent frame images, respectively, among the series of images.

The generating may further include determining a target facial expression intensity by dividing an interval between a first facial expression intensity mapped to a first frame image and a second facial expression intensity mapped to a second frame image adjacent to the first frame image, among the series of images, by a predetermined number, and generating a synthetic image corresponding to the determined target facial expression intensity.

The generating may include establishing a cropped image of each of the original image and the synthetic image as a training input, and mapping a facial expression intensity of the cropped image to the training input as a training output.

The establishing may include extracting the cropped image including a landmark from each of the original image and the synthetic image.

The generating may include morphing an object shape model to a facial expression intensity changed from a facial expression intensity designated for the original image by a predetermined intensity difference, and generating the synthetic image by applying texture information of the original image to the morphed object shape model.

The generating may include identifying a facial expression intensity of an object in the original image from the original image.

The training may include training the facial expression recognition model to output a facial expression intensity mapped to a training input from the training input of the training data.

The training may include performing forward propagation by inputting a training input of the training data into the facial expression recognition model, calculating a loss between a result of the forward propagation and a training output mapped to the training input, and performing backward propagation with respect to the calculated loss to reduce the calculated loss.

A non-transitory computer-readable storage medium may store instructions that, when executed by a processor, cause the processor to perform the method.

In still another general aspect, there is also provided a training apparatus for facial expression recognition, the training apparatus including a processor configured to generate a synthetic image from an original image, the synthetic image having a facial expression intensity different from a facial expression intensity of the original image, and train a facial expression recognition model based on training data including the original image and the synthetic image, and a memory configured to store at least one of the training data or the facial expression recognition model.

In a further general aspect, there is also provided a facial expression recognition apparatus including a memory configured to store a facial expression recognition model, and a processor operably coupled to the memory, the processor configured to acquire an input image including an object, and calculate a facial expression intensity of the object from the input image based on the facial expression recognition model.

According to another general aspect, a facial expression recognition method, includes actuating a processor to acquire an input image including an object to be recognized; generate a three-dimensional (3D) model of the object based on the input image; generate a morphed object by transformatively morphing the 3D-model of the object; train a facial expression recognition model with both the input image and the morphed object; and, identify a facial expression intensity of the object from the input image based on the facial expression recognition model.

The method may further include, mapping a texture of the object from the input image to the morphed object.

The method may further include generating a synthetic image of the morphed object; and, training the facial expression recognition model with both the input image and the synthetic image of the morphed object.

The method may further include permuting the 3D-model of the object to generate a plurality of synthetic images of different facial expression intensity; and, training the facial expression recognition model with the input image and the plurality of synthetic images of different facial expression intensity.

The method may further include permuting the 3D-model of the object to generate a plurality of synthetic images of different pose angles by varying any one or any combination of yaw, pitch, and roll of the 3D-model of the object; and, training the facial expression recognition model with the input image and the plurality of synthetic images of different pose angles.

A non-transitory computer-readable storage medium may store instructions that, when executed by a processor, cause the processor to perform the method.

Other features and aspects will be apparent from the following detailed description, the drawings, and the claims.

BRIEF DESCRIPTION OF THE DRAWINGS

3

FIG. 1 is a diagram illustrating an example of recognizing a facial expression using a facial expression recognition model.

FIG. 2 is a diagram illustrating a neural network in accordance with an embodiment.

FIG. 3 illustrates an example of generating training data and performing training based on the training data

FIG. 4 is a flowchart illustrating an example of a training method.

FIG. 5 is a flowchart illustrating an example of generating a synthetic image.

FIG. 6 illustrates an example of designating a facial expression intensity.

FIG. 7 illustrates an example of generating a synthetic image based on a pose.

FIG. 8 illustrates an example of generating a synthetic image based on a change in facial expression intensity.

FIG. 9 illustrates an example of generating a synthetic image based on image cropping.

FIG. 10 illustrates an example of training.

FIG. 11 illustrates an example of a neural network structure.

FIG. 12 is a flowchart illustrating an example of a recognition method.

FIG. 13 illustrates an example of a recognition process.

FIG. 14 illustrates an example of a recognition result.

FIG. 15 illustrates an example of utilizing facial expression intensity recognition.

FIG. 16 is a block diagram illustrating an example of a configuration of a training apparatus for facial expression recognition.

FIG. 17 is a block diagram illustrating an example of a configuration of a facial expression recognition apparatus.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent to one of ordinary skill in the art after gaining a thorough understanding of the disclosure of this application. The sequences of operations described herein are merely examples, and are not limited to those set forth herein, but may be changed as will be apparent to one of ordinary skill in the art after gaining such understanding of the disclosure of this application, with the exception of operations necessarily occurring in a certain order. Also, descriptions of functions and constructions that are well known to one of ordinary skill in the art may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Hereinafter, reference will now be made in detail to examples with reference to the accompanying drawings, wherein like reference numerals refer to like elements throughout.

Various alterations and modifications may be made to the examples. Here, the examples are not construed as limited to the disclosure and should be understood to include all changes, equivalents, and replacements.

The terminology used herein is for the purpose of describing particular examples only and is not to be limiting of the examples. As used herein, the singular forms "a", "an", and "the" are intended to include the plural forms as well, unless the context clearly indicates otherwise. It will be further understood that the terms "include/comprise" and/or "have" when used in this specification, specify the presence of stated features, integers, steps, operations, elements, components, and/or combinations thereof, but do not preclude the presence or addition of one or more other features, numbers, steps, operations, elements, components, and/or groups thereof.

Unless otherwise defined, all terms including technical and scientific terms used herein have the same meaning as commonly understood by one of ordinary skill in the art to which examples belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the examples with reference to the accompanying drawings, like reference numerals refer to like constituent elements and a repeated description related thereto will be omitted. When it is determined detailed description related to a related known function or configuration they may make the purpose of the examples unnecessarily ambiguous in describing the examples, the detailed description will be omitted here for clarity and conciseness.

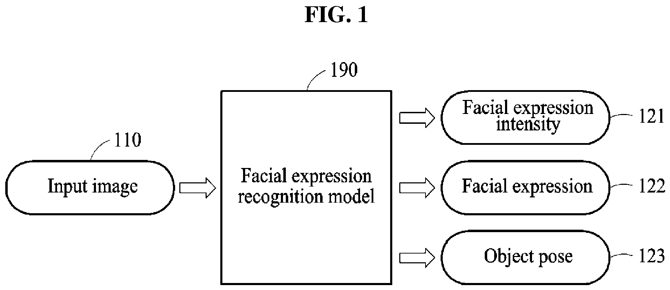

FIG. 1 is a diagram illustrating an example of recognizing a facial expression using a facial expression recognition model.

Referring to FIG. 1, a facial expression recognition apparatus determines information related to an object of an input image 110 from the input image 110 using a facial expression recognition model 190. The facial expression recognition apparatus determines, as the information related to the object, a facial expression intensity 121, a facial expression 122, and an object pose 123 of the object included in the input image 110.

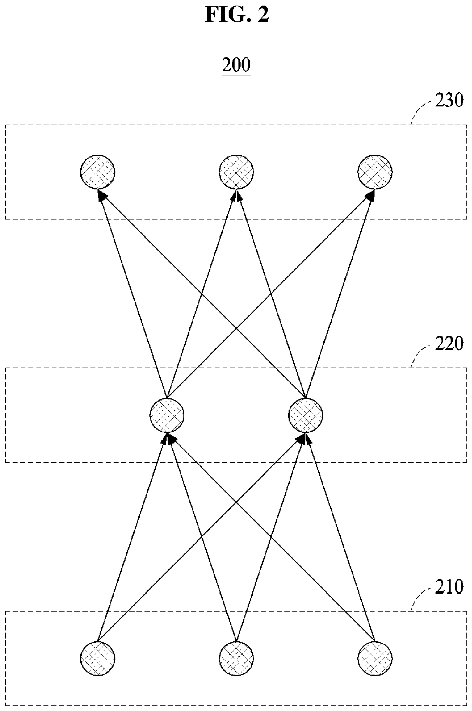

The facial expression recognition model 190 is a model configured to output information associated with a facial expression of an object from an image. For example, the facial expression recognition model 190 includes a neural network. However, examples are not limited thereto. The facial expression recognition model 190, according to an embodiment is configured to output a facial expression intensity expressed as consecutive values, and have a characteristic of being robust against a diminutive change in facial expression. The neural network will be described further with reference to FIG. 2.

The information associated with the facial expression of the object includes, for example, the facial expression intensity 121, the facial expression 122, and the object pose 123. Herein, the object is a human face. However, examples are not limited thereto. The object may include an animal that may make an emotional expression and the facial expression 122, and a body part associated with an emotional expression.

The facial expression 122 is a facial expression of the object. The facial expression 122 is information indicating emotions, for example, anger, contempt, disgust, fear, happiness, sadness, surprise, and neutrality such as being unemotional. In another example, the facial expression 122 is information indicating states, for example, sleepiness, concentration, negativeness, positiveness, arousal, and balance. However, the types of the facial expressions are not limited thereto. A different classification system may be used according one or more embodiments. The facial expression intensity 121 indicates a level of single type of facial expression. A facial expression label is a label indicating the facial expression 122.

A pose is a pose of an object, and indicates, for example, a level at which an object in an image tilts. Further, the pose indicates a level at which the object in the image rotates relative to a reference object which faces a front side. The pose of the object is expressed using a yaw angle, a pitch angle, and a roll angle of the object in the input image 110, for example, based on a state of viewing a front side. However, pose expression is not limited thereto, and may be changed according to embodiment.

For example, the pose expressed using the yaw angle is a pose of rotating or moving a head about a y axis, and includes a pose of shaking the head. The pose expressed using the pitch angle is a pose of moving the head about an x axis, and includes a pose of nodding the head. The pose expressed using the roll angle is a pose of rotating the head about a z axis, and includes a pose of tilting the head. Here, the x axis denotes a lateral axis of the image, the y axis denotes a vertical axis of the image, and the z axis denotes a longitudinal axis of the image. However, examples are not limited thereto.

FIG. 2 is a diagram illustrating an example of a neural network.

A facial expression recognition model includes a neural network 200. A method of performing facial expression recognition based on the neural network 200, an apparatus for performing the method, hereinafter, the facial expression recognition apparatus, a method of training the neural network 200, and an apparatus for training the neural network 200, hereinafter, the training apparatus, are disclosed. Herein, recognition includes verification and identification. Verification is an operation of determining whether input data is true or false, and identification is an operation of determining a label indicated by input data, among a plurality of labels.

A structure of the neural network 200is described below in advance of describing facial expression recognition.

The neural network 200 includes a plurality of layers, each including a plurality of nodes. The neural network 200 includes connection weights to connect the plurality of nodes included in each of the plurality of layers to a node included in another layer. The training apparatus obtains the neural network 200 from an internal database stored in a memory, or receives the neural network 200 from an external server through a communicator. Portions of the neural network 200 may be stored in one or more internal databases and other portions of the neural network 200 may be retrieved from the external server via one or more data transmission networks.

For example, the neural network 200 is a recognition model that simulates a computation capability of a biological system using a large number of artificial neurons connected through edges. The neural network 200 may be implemented as software, hardware, firmware, or a combination thereof. The neural network 200 may also be referred to as an artificial neural network.

The neural network 200 uses artificial neurons configured by modelling functions similar to biological neurons. The artificial neurons may also be referred to as nodes. The artificial neurons are connected to each other through edges having connection weights. The connection weights are predetermined values of the edges, and may also be referred to as synapse weights or connection strengths.

The neural network 200 includes a plurality of layers. For example, the neural network 200 includes an input layer 210, a hidden layer 220, and an output layer 230. The input layer 210 receives an input to be used to perform training or recognition and transmits the input to the hidden layer 220. The output layer 230 generates an output of the neural network 200 based on signals received from the hidden layer 220. The hidden layer 220 is disposed between the input layer 210 and the output layer 230. The hidden layer 220 changes a training input of training data received from the input layer 210 to a relatively predictable value.

The input layer 210, the hidden layer 220, and the output layer 230 each include a plurality of nodes. The nodes included in the input layer 210 may be referred to as input nodes, the nodes included in the hidden layer 220 may be referred to as hidden nodes, and the nodes included in the output layer 230 may be referred to as output nodes.

The input nodes included in the input layer 210 and the hidden nodes included in the hidden layer 220 are connected to each other through edges having connection weights. The hidden nodes included in the hidden layer 220 and the output nodes included in the output layer 230 are also connected to each other through edges having connection weights.

Although not shown in the drawings, a neural network may include a plurality of hidden layers. A neural network including a plurality of hidden layers may be referred to as a deep neural network. Training the deep neural network is, for example, referred to as deep learning. Assuming that the hidden layer 220 includes a first hidden layer, a second hidden layer, and a third hidden layer, an output of a hidden node included in the first hidden layer may be connected to hidden nodes belonging to the second hidden layer. An output of a hidden node belonging to the second hidden layer may be connected to hidden nodes belonging to the third hidden layer.

For example, the training apparatus and the facial expression recognition apparatus input outputs of previous hidden nodes included in a previous hidden layer into each hidden layer through edges having connection weights, and generate outputs of hidden nodes included in a hidden layer based on values obtained by applying the connection weights to the outputs of the previous hidden nodes and activation functions. To fire an output to a next hidden node, a result of the activation functions needs to exceed a threshold of a current hidden node. In this example, a node maintains a deactivated state without firing a signal to a next node until a predetermined threshold strength of activation is reached through input vectors.

The training apparatus trains the neural network 200 through supervised learning. The training apparatus may be implemented as software modules, hardware modules, firmware, or a combination thereof. Supervised learning refers to a method of inputting a training input of training data and a corresponding training output into the neural network 200, and updating connection weights of edges so that output data corresponding to the training output of the training data may be output. Although FIG. 2 illustrates the structure of the neural network as a structure of nodes, examples are not limited thereto. Various data structures may be used to store the neural network in a memory storage.

The training apparatus, according to one or more embodiments, determines parameters of the nodes through a gradient descent scheme which is based on a loss to be back-propagated to the neural network and output values of the nodes included in the neural network. For example, the training apparatus updates the connection weights among the nodes through loss back-propagation learning. Loss back-propagation learning refers to a method of estimating a loss with respect to provided training data through forward computation, and updating connection weights to reduce the loss while propagating the estimated loss in a backward direction from the output layer 230 toward the hidden layer 220 and the input layer 210. Processing of the neural network 200 is performed in an order of the input layer 210, the hidden layer 220, and the output layer 230. However, in the loss back-propagation learning, the connection weights are updated in an order of the output layer 230, the hidden layer 220, and the input layer 210. To process the neural network as desired, one or more processors use a buffer memory configured to store layers or a series of computed data.

The training apparatus defines an objective function to be used to measure optimalities of currently set connection weights, continuously changes the connection weights based on a result of the objective function, and iteratively performs training. For example, the objective function is a loss function to be used by the neural network 200 to calculate a loss between an actual output value and a value expected to be output with respect to a training input of training data. The training apparatus updates the connection weights to reduce a value of the loss function.

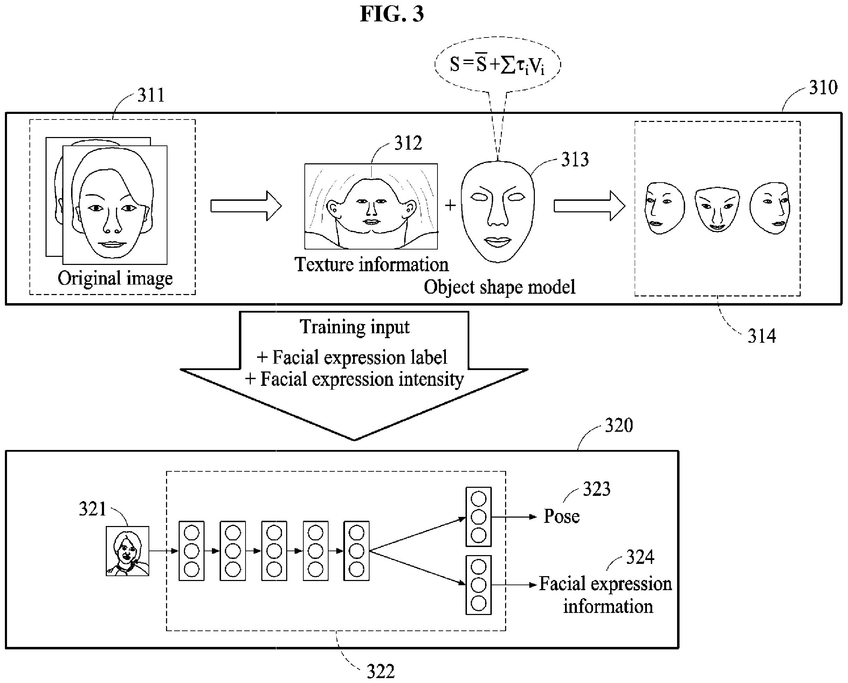

FIG. 3 illustrates an example of generating training data and performing training based on the training data.

Referring to FIG. 3, a training apparatus for facial expression recognition, hereinafter, the training apparatus, performs operation 310 and operation 320.

Operation 310 is an operation of generating various synthetic images 314 from an original image 311. The generated synthetic images 314 are used for training as training inputs.

The training apparatus extracts texture information 312 and an object shape model 313 from the original image 311. The original image 311 is a sequence image including a plurality of frame images. The texture information 312 is information indicating a texture of an object in the original image 311. The object shape model 313 is a model representing a shape of the object, and includes, for example, geometry information related to the shape of the object. The object shape model 131 is morphable. The object shape model 313 is expressed by Equation 1.

[Equation 1]

$$\mathbf{S} = \overline{\mathbf{S}} + \sum \tau_i \mathbf{V_i}$$

In Equation 1, $\mathbf{S}$ denotes a composited final object shape model 313. $\overline{\mathbf{S}}$ denotes a generic object model. The generic object model is a model representing an average shape of a predetermined type of object, for example, a human. $\mathbf{V_i}$ denotes an i-th facial expression component, and $\tau_i$ denotes a weight with respect to the i-th facial expression component. Here, i is an integer greater than or equal to "0".

For example, the texture information 312 and the object shape model 313 are mapped based on a feature point and a landmark of the object. The feature point is a point representing a feature of the object, and the landmark is a part indicating a feature that represents the object.

The training apparatus generates a synthetic image 314 based on the extracted texture information 312 and the extracted object shape model 313. The training apparatus generates training data by mapping a facial expression label and a facial expression intensity to the generated synthetic image 314. The synthetic image 314 corresponds to a training input of the training data, and the facial expression label, the facial expression intensity, and the pose correspond to training outputs mapped to the corresponding training input. For example, the training data has a uniform pose distribution, and a facial expression recognition model trained based on such training data exhibits a significantly improved recognition performance. Further, since training data including various poses and facial expression intensities is augmented, the training apparatus performs training using the augmented training data without collecting actual images.

The training apparatus generates the training data by mapping a first facial expression intensity corresponding to the original image as a training output with respect to the original image, and mapping a second facial expression intensity corresponding to the synthetic image as a training output with respect to the synthetic image.

Operation 320 is an operation of training a facial expression recognition model 322 based on a training input 321 and training outputs of the training data. The training outputs include, for example, a pose 323 and facial expression information 324. The training apparatus trains the facial expression recognition model 322 to output a facial expression intensity mapped to the training input 321 from the training input 321 of the training data. For example, the training apparatus trains the facial expression recognition model 322, for example, a neural network, to output the pose 323 and the facial expression information 324 from the training input 321. Thus, the training apparatus obtains a facial expression recognition model that is robust against a change in pose and a minimal change in facial expression, and simultaneously estimates a facial expression and a pose of an object. Thus, the training apparatus utilizes a memory efficiently and exhibit a fast operation speed.

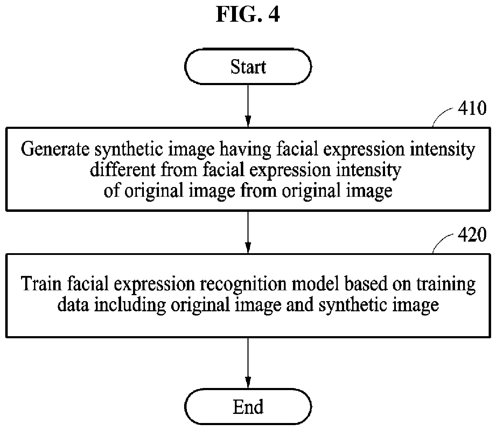

FIG. 4 is a flowchart illustrating an example of a training method.

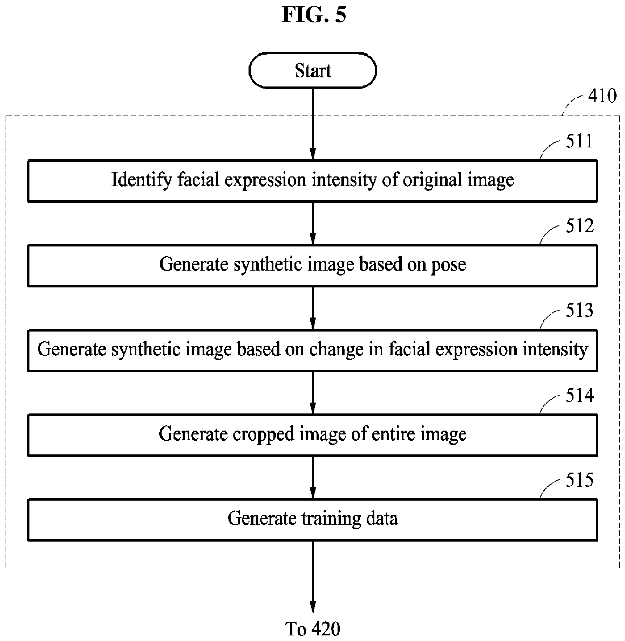

Referring to FIG. 4, in operation 410, a training apparatus for facial expression recognition, hereinafter, the training apparatus, generates a synthetic image from an original image, the synthetic image having a facial expression intensity different from a facial expression intensity of the original image. Generation of the synthetic image will be described further with reference to FIG. 5.

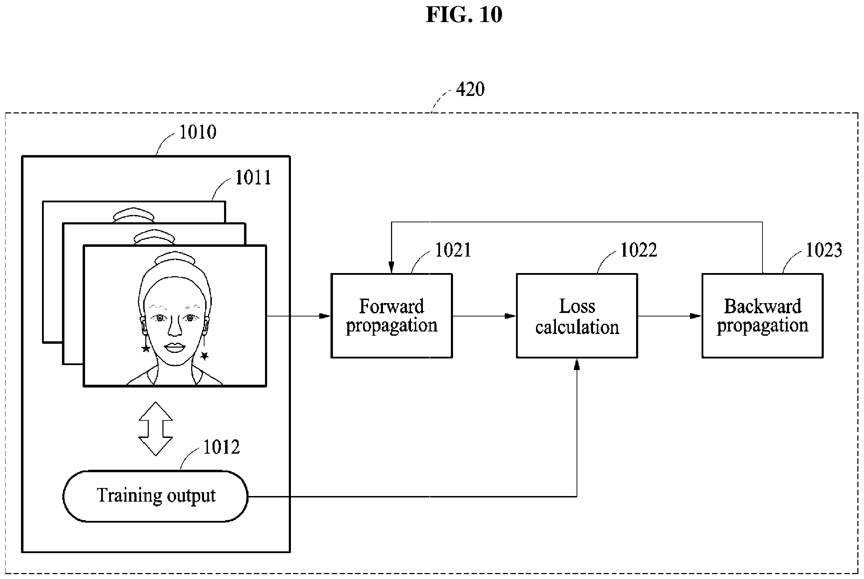

In operation 420, the training apparatus trains a facial expression recognition model based on training data including the original image and the synthetic image. Training of the facial expression recognition model will be described further with reference to FIG. 10.

FIG. 5 is a flowchart illustrating an example of generating a synthetic image in accordance with an embodiment.

As described above, in operation 410, the training apparatus extracts texture information from the original image, and generates the synthetic image by synthesizing the extracted texture information with an object shape model corresponding to the facial expression intensity of the synthetic image. For example, the training apparatus applies the texture information to the object shape model such that a feature point of the texture information matches a feature point of the object shape model.

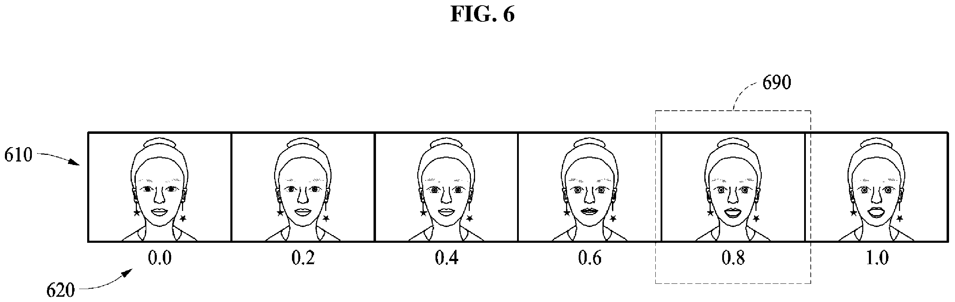

Referring to FIG. 5, in operation 511, the training apparatus identifies the facial expression intensity of the original image. The training apparatus extracts the texture information and the object shape model from the original image, and identifies the facial expression intensity of an object in the original image based on the object shape model. The object shape model determines the facial expression intensity indicated by the extracted object shape model. Further, in a case in which an original image including a plurality of frame images with respect to a single facial expression is received, the training apparatus identifies the facial expression intensity as shown in FIG. 6.

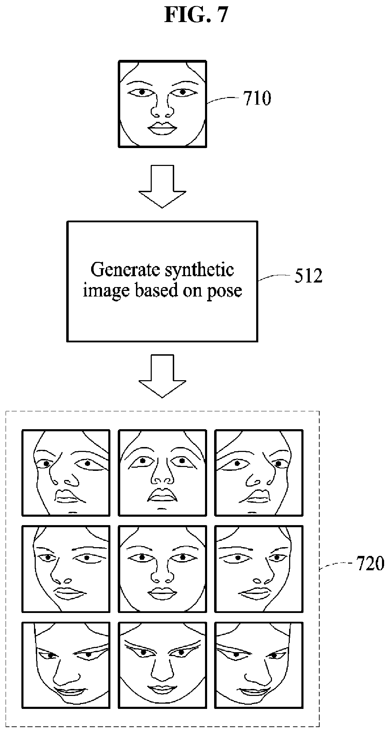

In operation 512, the training apparatus generates a synthetic image based on a pose. The training apparatus morphs an object shape model having a default facial expression intensity based on a designated facial expression intensity. The object shape model having the default facial expression intensity is a generic object model, which will be described further with reference to FIG. 7.

In operation 513, the training apparatus generates a synthetic image based on a change in the facial expression intensity. The training apparatus morphs an object shape model corresponding to the acquired original image for each facial expression intensity, and generates the synthetic image by synthesizing the texture information with a changed facial expression intensity.

In operation 514, the training apparatus generates a cropped image of the entire image. The training apparatus determines a cropped image of each of the original image and the synthetic image as a training input. The training apparatus extracts a landmark from the original image, and generates a cropped image corresponding to the extracted landmark. However, examples are not limited thereto. The training apparatus may generate a cropped image corresponding to another feature point. The training apparatus maps a facial expression intensity of a corresponding image to the training input as a training output.

In operation 515, the training apparatus generates training data. The training apparatus maps a facial expression label, a facial expression intensity, and a pose corresponding to each generated synthetic image to the corresponding synthetic image as training outputs.

The training apparatus generates cropped images corresponding to $N_1$ poses, $N_2$ facial expression intensities, and $N_3$ patches, and finally generates training data including $N_1*N_2*N_3$ images from a single original image. Here, $N_1$, $N_2$, and $N_3$ are each an integer greater than or equal to "1".

FIG. 6 illustrates an example of designating a facial expression intensity.

A training apparatus for facial expression recognition, hereinafter, the training apparatus, according to an embodiment, acquires a series of images as an original image 610, the series of images including a plurality of consecutive frame images associated with a single facial expression. The training apparatus determines a facial expression intensity 620 with respect to a corresponding frame image based on a total number of frames of the series of images and a frame order of each frame image of the series of images. Equation 2 describes an example of determining the facial expression intensity 620.

[Equation 2]

$$\text{Soft label of current frame} = \frac{current\ frame}{(\#of\ frames\ in\ a\ given\ sequence - 1)}$$

In Equation 2, Soft label denotes a facial expression intensity 620 designated for a current frame image, among the plurality of frame images. #*of frames in a given sequence* denotes a total number of frames, and *current frame* denotes a frame order of the current frame. For example, FIG. 6 illustrates a series of images with respect to an object that makes a facial expression of surprise, the series of images including six frames in total. A first frame is expressed as 0-th frame, and a last frame is expressed as a 5-th frame. Here, a predetermined frame image 690 corresponds to a 4-th frame, and thus a facial expression intensity of the frame image 690 is calculated as expressed by 4/(6-1)=0.8.

However, the example of designating the facial expression intensity is not limited thereto. For example, in a case in which a single original image is acquired, the training apparatus extracts an object shape model and texture information from the original image. The extracted object shape model is a model morphed from a generic object model by a predetermined facial expression intensity. Thus, the training apparatus identifies a facial expression intensity indicated by the extracted object shape model.

FIG. 7 illustrates an example of generating a synthetic image based on a pose in accordance with an embodiment.

A training apparatus for facial expression recognition, hereinafter, the training apparatus, according to an embodiment, generates a synthetic image based on a pose, in operation 512 as described with reference to FIG. 5. The training apparatus designates poses of various angles, and morphs an object shape model to a designated pose. The training apparatus morphs an object shape model having a default pose, for example, a generic object model, based on a designated pose. For example, the training apparatus designates at least one of various pitch angles, yaw angles, or roll angles. The training apparatus generates synthetic images with respect to the various angles by applying texture information to the object shape model morphed for each designated angle. Thus, as shown in FIG. 7, the training apparatus generates synthetic images 720 of various angles from a single image 710.

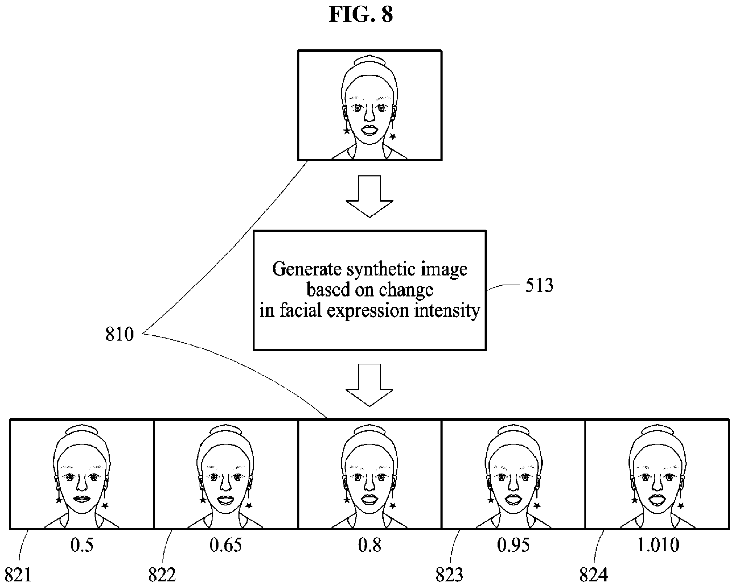

FIG. 8 illustrates an example of generating a synthetic image based on a change in facial expression intensity.

A training apparatus for facial expression recognition, hereinafter, the training apparatus, according to an embodiment, generates a synthetic image based on a change in facial expression intensity, in operation 513 as described with reference to FIG. 5. The training apparatus morphs an object shape model to a facial expression intensity changed from a facial expression intensity designated for an original image 810 by a predetermined intensity difference. The training apparatus generates the synthetic image by applying texture information of the original image 810 to the morphed object shape model. For example, as shown in FIG. 8, the training apparatus generates synthetic images 823 and 824 having facial expression intensities that are gradually increased from a facial expression intensity of the original image 810 by an intensity difference, for example, 0.15 (e.g. 0.95, 1.010). Further, the training apparatus generates synthetic images 821 and 822 having facial expression intensities that are gradually decreased from the facial expression intensity of the original image 810 by the intensity difference, for example, 0.15 (e.g. 0.65, 0.5).

Thus, the training apparatus generates multiple synthetic images 821, 822, 823, and 824 having facial expression intensities similar to the facial expression intensity of the original image 810, with respect to the single original image 810.

However, the example of generating synthetic images based on a change in facial expression intensity is not limited thereto. In another example, the training apparatus generates a synthetic image having a facial expression intensity between facial expression intensities mapped to two adjacent frame images, respectively, among the series of images. The training apparatus determines a target facial expression intensity by dividing an interval between a first facial expression intensity mapped to a first frame image and a second facial expression intensity mapped to a second frame image adjacent to the first frame image, among the series of images, by a predetermined number. The training apparatus generates a synthetic image corresponding to the determined target facial expression intensity. Thus, in a case in which the original image includes a series of frame images, the training apparatus generates a synthetic image that interpolates an interval between adjacent frame images.

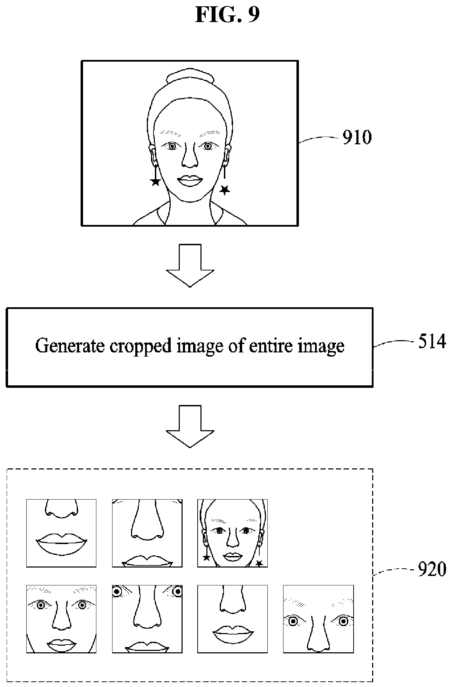

FIG. 9 illustrates an example of generating a synthetic image based on image cropping.

A training apparatus for facial expression recognition, hereinafter, the training apparatus acquires a cropped image of the entire image, in operation 514 as described with reference to FIG. 5. The training apparatus extracts a cropped image including a landmark from each of an original image and a synthetic image. However, examples are not limited thereto. The training apparatus, according to an embodiment extracts cropped images corresponding to regions representing various feature points of an image. For example, as shown in FIG. 9, the training apparatus extracts cropped images 920 related to parts such as a mouth, a nose, and eyes, and other feature points from a single image 910, for example, the original image or the synthetic image.

FIG. 10 illustrates an example of training in accordance with an embodiment.

A training apparatus for facial expression recognition, hereinafter, the training apparatus trains a facial expression recognition model using training data 1010, in operation 420.

In operation 1021, the training apparatus performs forward propagation by inputting a training input 1011 of the training data 1010 into the facial expression recognition model. The training apparatus calculates an output using the facial expression recognition model from the training input 1011.

In operation 1022, the training apparatus calculates a loss between a result of the forward propagation and a training output 1012 mapped to the training input 1011. The training apparatus calculates the loss based on the output calculated from the training input 1011 and the training output 1012 mapped to the training input 1011.

In operation 1023, the training apparatus performs backward propagation with respect to the calculated loss to reduce the calculated loss. The training apparatus updates a parameter of the facial expression recognition model to reduce the loss. The training apparatus performs operations 1021, 1022, and 1023 until the loss is less than a threshold loss.

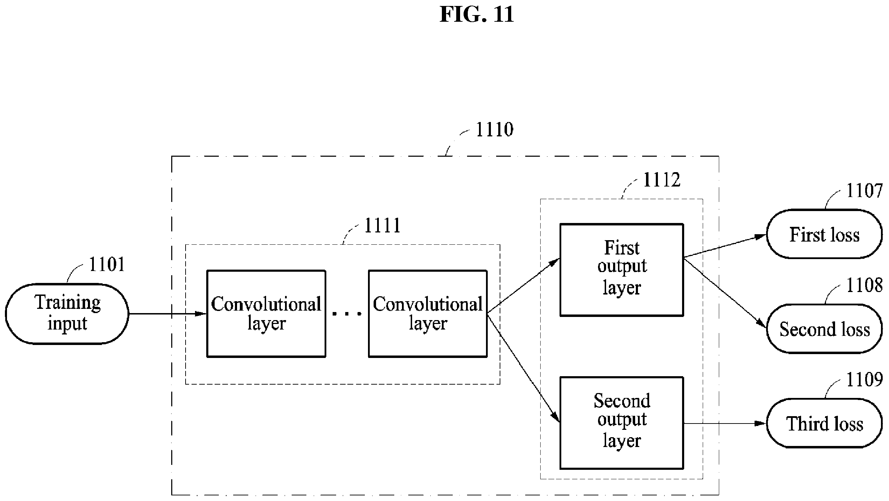

FIG. 11 illustrates a neural network structure in accordance with an embodiment.

A facial expression recognition model includes a neural network 1110. The neural network 1110 includes an input layer (as seen, for example, in input layer 210 of Fig. 2), a hidden layer 1111, and an output layer 1112.

In FIG. 11, the hidden layer 1111 includes convolutional layers, and the output layer 1112 includes a first output layer and a second output layer. The first output layer and the second output layer are fully connected (FC) layers. The first output layer outputs information related to a facial expression, and the second output layer outputs information related to a pose of an object.

For example, a training apparatus for facial expression recognition calculates a first loss 1107, a second loss 1108, and a third loss 1109 through the neural network 1110 based on training input 1101, and trains the neural network 1110 to reduce the losses 1107, 1108, and 1109. The first loss 1107 is a loss related to a facial expression label, for example, a classification loss. The second loss 1108 is a loss related to a facial expression intensity, for example, a regression loss. The third loss 1109 is a loss related to an object pose, for example, a regression loss.

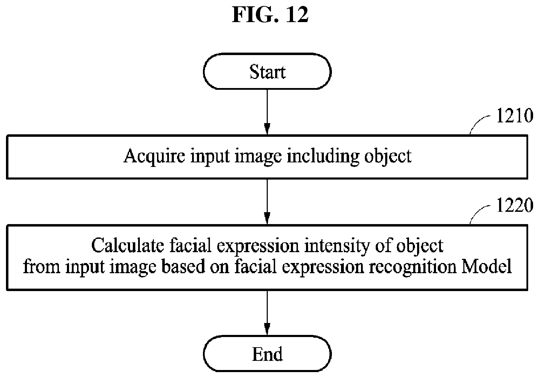

FIG. 12 is a flowchart illustrating a recognition method in accordance with an embodiment.

Referring to FIG. 12, in operation 1210, a facial expression recognition apparatus acquires an input image including an object. The facial expression recognition apparatus acquires the input image by capturing an external space with one or more cameras, or receives the input image through communication.

In operation 1220, the facial expression recognition apparatus calculates a facial expression intensity of the object from the input image based on a facial expression recognition model. The facial expression recognition apparatus further calculates a facial expression of the object and a pose of the object from the input image based on the facial expression recognition model. Thus, the facial expression recognition apparatus simultaneously calculates a facial expression label and the facial expression intensity of the object along with the pose of the object. The facial expression recognition apparatus recognizes at least one of various pitch angles, yaw angles, or roll angles as the pose of the object based on the facial expression recognition model.

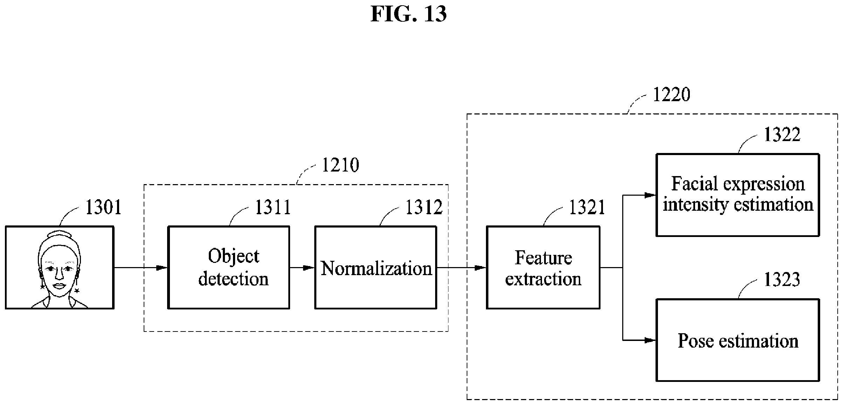

FIG. 13 illustrates an example of a recognition process.

A facial expression recognition apparatus estimates a facial expression intensity and a pose using the facial expression recognition model trained as described with reference to FIGS. 1 through 11.

In operation 1210, the facial expression recognition apparatus performs object detection 1311 and normalization 1312. The facial expression recognition apparatus detects an object region corresponding to an object from an input image 1301. Further, the facial expression recognition apparatus normalizes the object region such that a size, a brightness, and a resolution of the object region match the facial expression recognition model.

In operation 1220, the facial expression recognition apparatus performs feature extraction 1321, facial expression intensity estimation 1322, and pose estimation 1323. The facial expression recognition apparatus calculates a facial expression intensity of the object from the object region detected from the input image and normalized. For example, the facial expression recognition apparatus extracts feature data from the normalized object region. The facial expression recognition apparatus estimates a facial expression intensity based on the extracted feature data. Further, the facial expression recognition apparatus estimates a pose based on the extracted feature data.

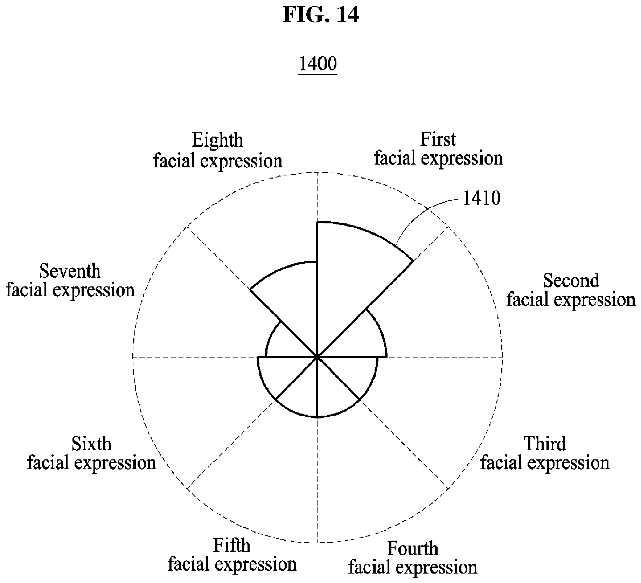

FIG. 14 illustrates a recognition result in accordance with an embodiment.

A facial expression recognition apparatus generates a recognition result 1400. The recognition result 1400 includes, for example, a facial expression intensity for each type of facial expression. The facial expression recognition apparatus calculates a facial expression intensity with respect to each of a plurality of facial expressions based on a facial expression recognition model. As shown in FIG. 14, the facial expression recognition apparatus calculates a facial expression intensity 1410 corresponding to a first facial expression such that the facial expression intensity 1410 has a relatively great value when compared to another type of facial expression. However, the facial expression recognition apparatus may estimate a facial expression implying various emotions by calculating a facial expression intensity with respect to another type of facial expression.

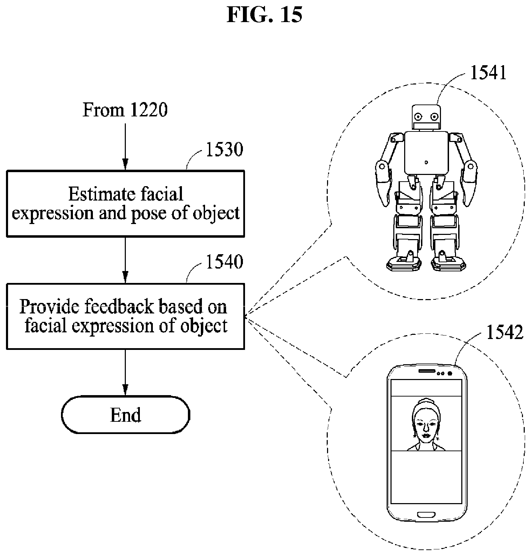

FIG. 15 illustrates an example of utilizing facial expression intensity recognition.

Referring to FIG. 15, in operation 1530, a facial expression recognition apparatus estimates a facial expression and a pose of an object. As described above, the facial expression recognition apparatus estimates the pose of the object along with a facial expression label and a facial expression intensity of the object from input data based on a trained facial expression recognition model.

In operation 1540, the facial expression recognition apparatus provides a feedback based on the facial expression of the object. The facial expression recognition apparatus determines feedback information based on the facial expression intensity of the object, and provides the determined feedback information to a user. Herein, the feedback provided based on the facial expression of the object includes an operation of performing a service suitable for a situation of an individual, an operation of providing emotional exchange, and an operation of accumulating information related to a family and emotionally communicating and assisting. The feedback information indicates an operation associated with a feedback.

The facial expression recognition apparatus searches for content corresponding to an emotion identified based on a facial expression of an object, among a plurality of items of content. The facial expression recognition apparatus provides content having an emotion level corresponding to the facial expression intensity, among the found content. The content is digital information that is provided to the user, and includes one or more of a text, a sound, and one or more images. Each item of content is mapped to a type of facial expression, a type of emotion, and an emotion level. The facial expression recognition apparatus identifies a type of the facial expression of the user and a facial expression intensity, and provides the user with content corresponding thereto.

For example, the facial expression recognition apparatus is applicable to a service robot 1541 that provides a service based on the recognized facial expression and facial expression intensity. The facial expression recognition apparatus is also applicable to a device that provides an assist service 1542 to assist an action of the user based on the recognized facial expression and facial expression intensity. For example, the device includes a smart phone, smart watch, a desktop personal computer (PC), and a tablet PC.

Further, the facial expression recognition apparatus provides high-accuracy recognition with respect to, for example, a side face of the user, in relation to the service robot 1541. Thus, the facial expression recognition apparatus is, according to an embodiment, utilized for the service robot 1541 that operates in an environment in which a face of a user is tracked from various angles.

Moreover, the facial expression recognition apparatus updates the facial expression recognition model based on a result of recognizing a facial expression intensity of an individual user. Updating of the facial expression recognition model is similar to the training process of FIGS. 10 and 11.

For example, the facial expression recognition apparatus collects a predetermined number of frame images in the process of acquiring an input image. The facial expression recognition apparatus selects, from the predetermined number of frame images, facial expression images of consecutive frames from a first frame image identified as a neutral facial expression to a second frame image identified as one of a plurality of facial expressions. Here, the first frame image is a frame image corresponding to a point in time at which the object initiates to form a predetermined facial expression, and the second frame image is a frame image corresponding to a point in time at which the object completes the predetermined facial expression. The neutral facial expression is a facial expression for which a facial expression intensity is identified to be less than or equal to a neutral threshold, and represents an unemotional facial expression. A facial expression with a facial expression intensity close to "0" represents a more neutral facial expression. For example, the facial expression recognition apparatus determines a frame image having a maximum facial expression intensity, among the predetermined number of frame images, as the second frame image.

The facial expression recognition apparatus updates the facial expression recognition model based on the selected facial expression images. The facial expression recognition apparatus maps a facial expression intensity to each of the facial expression images based on a total number of the facial expression images and a frame order of each of the facial expression images. The facial expression recognition apparatus updates the facial expression recognition model to output a facial expression intensity mapped to a corresponding facial expression image from each of the facial expression images. Thus, the facial expression recognition apparatus provides a personalized facial expression recognition model to the user.

The facial expression recognition apparatus identifies user information corresponding to the object, and updates the facial expression recognition model for each item of the identified user information. For example, the facial expression recognition apparatus generates and updates the facial expression recognition model for each individual user, thereby managing each facial expression recognition model to be personalized for an individual user. Thus, the facial expression recognition apparatus recognizes a facial expression, a facial expression intensity, and a pose with a relatively high accuracy with respect to an individual user.

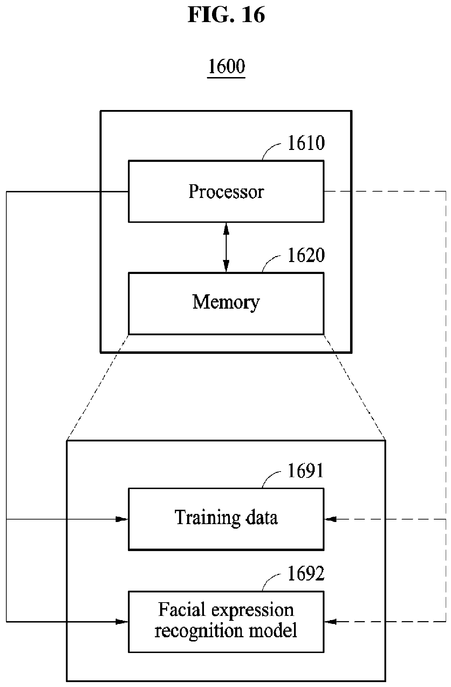

FIG. 16 is a block diagram illustrating a configuration of a training apparatus for facial expression recognition in accordance with an embodiment.

Referring to FIG. 16, the training apparatus 1600 for facial expression recognition includes a processor 1610 and a memory 1620.

The processor 1610 generates a synthetic image from an original image, the synthetic image having a facial expression intensity different from a facial expression intensity of the original image, and trains a facial expression recognition model 1692 based on training data 1691 including the original image and the synthetic image.

The memory 1620 stores at least one of the training data 1691 or the facial expression recognition model 1692.

However, the operations of the processor 1610 and the memory 1620 are not limited thereto. The processor 1610 and the memory 1620 may perform operations combined with the operations of the training apparatus 1600 described with reference to FIGS. 1 through 15.

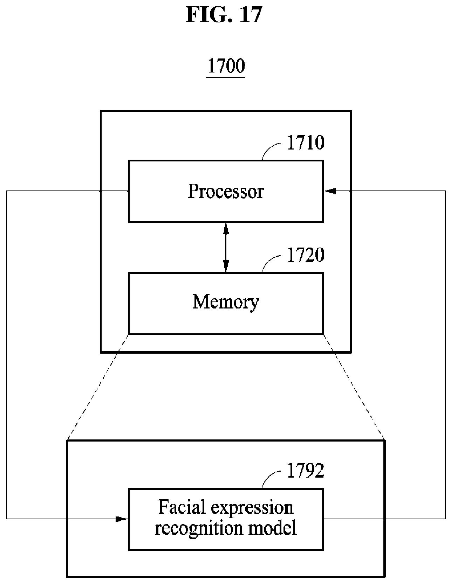

FIG. 17 is a block diagram illustrating a configuration of a facial expression recognition apparatus in accordance with an embodiment.

Referring to FIG. 17, a facial expression recognition apparatus 1700 includes a processor 1710 and a memory 1720.

The processor 1710 acquires an input image including an object, and calculates a facial expression intensity of the object from the input image based on a facial expression recognition model 1792.

The memory 1720 stores the facial expression recognition model 1792.

However, the operations of the processor 1710 and the memory 1720 are not limited thereto. The processor 1710 and the memory 1720 may perform operations combined with the operations of the facial expression recognition apparatus 1700 described with reference to FIGS. 1 through 15.

The apparatuses, units, modules, devices, and other components illustrated in FIGS. 16 and 17 that perform the operations described herein with respect to FIGS. 1 through 15 are implemented by hardware components. Examples of hardware components include controllers, sensors, generators, drivers, memories, comparators, arithmetic logic units, adders, subtractors, multipliers, dividers, integrators, processors, and any other electronic components known to one of ordinary skill in the art configured to perform the operations described in this application. In one example, the hardware components are implemented by one or more processors or computers. A processor or computer is implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices known to one of ordinary skill in the art that is capable of responding to and executing instructions in a defined manner to achieve a desired result. In one example, a processor or computer includes, or is connected to, one or more memories storing instructions or software that are executed by the processor or computer. Hardware components implemented by a processor or computer execute instructions or software, such as an operating system (OS) and one or more software applications that run on the OS, to perform the operations described herein with respect to FIGS. 1 through 15. The hardware components also access, manipulate, process, create, and store data in response to execution of the instructions or software. For simplicity, the singular term "processor" or "computer" may be used in the description of the examples described herein, but in other examples multiple processors or computers are used, or a processor or computer includes multiple processing elements, or multiple types of processing elements, or both. In one example, a hardware component includes multiple processors, and in another example, a hardware component includes a processor and a controller. A hardware component has any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-15 that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processors and a controller, may perform a single operation, or two or more operations. Instructions or software to control a processor or computer to implement the hardware components and perform the methods as described above are written as computer programs, code segments, instructions or any combination thereof, for individually or collectively instructing or configuring the processor or computer to operate as a machine or special-purpose computer to perform the operations performed by the hardware components and the methods as described above. In one example, the instructions or software include machine code that is directly executed by the processor or computer, such as machine code produced by a compiler. In another example, the instructions or software include higher-level code that is executed by the processor or computer using an interpreter. Programmers of ordinary skill in the art can readily write the instructions or software based on the block diagrams and the flow charts illustrated in the drawings and the corresponding descriptions in the specification, which disclose algorithms for performing the operations performed by the hardware components and the methods as described above.

The instructions or software to control a processor or computer to implement the hardware components and perform the methods as described above, and any associated data, data files, and data structures, are recorded, stored, or fixed in or on one or more non-transitory computer-readable storage media. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, and any device known to one of ordinary skill in the art that is capable of storing the instructions or software and any associated data, data files, and data structures in a non-transitory manner and providing the instructions or software and any associated data, data files, and data structures to a processor or computer so that the processor or computer can execute the instructions. In one example, the instructions or software and any associated data, data files, and data structures are distributed over network-coupled computer systems so that the instructions and software and any associated data, data files, and data structures are stored, accessed, and executed in a distributed fashion by the processor or computer.

While this disclosure includes specific examples, it will be apparent to one of ordinary skill in the art, after gaining a thorough understanding of the disclosure of the subject application, that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

**CLAUSES**

1. A facial expression recognition training method, the method comprising:

generating a synthetic image from an original image, wherein the synthetic image is generated to have a facial expression intensity different from a facial expression intensity of the original image; and
training a facial expression recognition model based on training data comprising the original image and the synthetic image.

2. The method of clause 1, wherein the generating comprises:

extracting texture information from the original image; and
generating the synthetic image by synthesizing the extracted texture information with an object shape model corresponding to the facial expression intensity of the synthetic image.

3. The method of clause 2, wherein the generating further comprises morphing an object shape model having a default facial expression intensity based on a designated facial expression intensity.

4. The method of clause 2 or 3, wherein the generating further comprises morphing an object shape model having a default pose based on a designated pose.

5. The method of any of clauses 1-4, wherein the generating comprises generating the training data by mapping a first facial expression intensity corresponding to the original image as a training output with respect to the original image, and mapping a second facial expression intensity corresponding to the synthetic image as a training output with respect to the synthetic image.

6. The method of any of clauses 1-5, wherein the generating comprises:

acquiring a series of images as the original image, the series of images including a plurality of consecutive frame images associated with a single facial expression; and
determining a facial expression intensity with respect to a corresponding frame image based on a total number of frames of the series of images and a frame order of each frame image of the series of images.

7. The method of any of clauses 1-6, wherein the generating comprises:

establishing a cropped image of each of the original image and the synthetic image as a training input; and
mapping a facial expression intensity of the cropped image to the training input as a training output.

8. The method of clause 7, wherein the establishing comprises extracting the cropped image including a landmark from each of the original image and the synthetic image.

9. The method of any of clauses 1-8, wherein the generating comprises:

morphing an object shape model to a facial expression intensity changed from a facial expression intensity designated for the original image by a predetermined intensity difference; and
generating the synthetic image by applying texture information of the original image to the morphed object shape model.

## Claims

1. A facial expression recognition method, comprising:

actuating a processor to acquire an input image including an object; and
identifying a facial expression intensity of the object from the input image based on a facial expression recognition model.

2. The method of claim 1, wherein the identifying comprises calculating a facial expression intensity with respect to each of a plurality of facial expressions from the input image based on the facial expression recognition model.

3. The method of claim 1 or 2, wherein the identifying comprises further calculating at least one of a facial expression of the object or a pose of the object from the input image based on the facial expression recognition model.

4. The method of claim 1, 2 or 3, further comprising:

detecting an object region corresponding to the object from the input image; and
normalizing the object region,
wherein the identifying comprises calculating the facial expression intensity of the object from the normalized object region based on the facial expression recognition model.

5. The method of any of claims 1-4, further comprising:

determining feedback information based on the facial expression intensity of the object; and
providing the determined feedback information to a user.

6. The method of claim 5, wherein the determining comprises:

searching for content corresponding to an emotion identified based on a facial expression of the object among a plurality of items of content; and
providing content having an emotion level corresponding to the facial expression intensity among the found content.

7. The method of any of claims 1-6, wherein the acquiring comprises collecting frame images,
wherein the method further comprises:

selecting, from the frame images, facial expression images of consecutive frames from a first frame image identified as a neutral facial expression and a second frame image identified as one of a plurality of facial expressions; and
updating the facial expression recognition model based on the selected facial expression images.

8. The method of claim 7, wherein the selecting comprises determining a frame image having a substantially maximum facial expression intensity, among the frame images, as the second frame image, and
the updating comprises:

mapping a facial expression intensity to each of the facial expression images based on a total number of the facial expression images and a frame order of each of the facial expression images; and
updating the facial expression recognition model to output a facial expression intensity mapped to a corresponding facial expression image from each of the facial expression images.

9. The method of claim 7 or 8, wherein the updating comprises:

identifying user information corresponding to the object; and
updating the facial expression recognition model for each item of the identified user information.

10. A non-transitory computer-readable storage medium storing instructions that, when executed by a processor, cause the processor to perform the method of any of claims 1-9 and/or any of clauses 1-9.

11. A facial expression recognition apparatus, comprising:

a memory configured to store a facial expression recognition model; and
a processor operably coupled to the memory, the processor configured:

to acquire an input image including an object, and
to identify a facial expression intensity of the object from the input image based on the facial expression recognition model.

12. A facial expression recognition method, comprising:

actuating a processor to:

acquire an input image comprising an object to be recognized;
generate a three-dimensional (3D) model of the object based on the input image;
generate a morphed object by transformatively morphing the 3D-model of the object;

train a facial expression recognition model with both the input image and the morphed object; and,
identify a facial expression intensity of the object from the input image based on the facial expression recognition model.

13. The method of claim 12, further comprising, mapping a texture of the object from the input image to the morphed object.

14. The method of claim 13, further comprising generating a synthetic image of the morphed object; and,
training the facial expression recognition model with both the input image and the synthetic image of the morphed object,
further preferably comprising permuting the 3D-model of the object to generate a plurality of synthetic images of different facial expression intensity; and,
training the facial expression recognition model with the input image and the plurality of synthetic images of different facial expression intensity,
further preferably comprising permuting the 3D-model of the object to generate a plurality of synthetic images of different pose angles by varying any one or any combination of yaw, pitch, and roll of the 3D-model of the object; and,
training the facial expression recognition model with the input image and the plurality of synthetic images of different pose angles.

15. A non-transitory computer-readable storage medium storing instructions that, when executed by a processor, cause the processor to perform the method of any of claims 11-14.

**FIG. 1**

# FIG. 2

<u>200</u>

**FIG. 3**

## FIG. 4

```
                    ┌─────────┐
                    │  Start  │
                    └─────────┘
                         │
                         ▼
```
                                                              ⌐ 410
┌───────────────────────────────────────────────────────────┐
│  Generate synthetic image having facial expression intensity│
│         different from facial expression intensity          │
│           of original image from original image             │
└───────────────────────────────────────────────────────────┘
                         │
                         ▼
                                                              ⌐ 420
┌───────────────────────────────────────────────────────────┐
│  Train facial expression recognition model based on training│
│      data including original image and synthetic image      │
└───────────────────────────────────────────────────────────┘
```
                         │
                         ▼
                    ┌─────────┐
                    │   End   │
                    └─────────┘
```

# FIG. 5

Start

_ 410

_ 511

Identify facial expression intensity of original image

_ 512

Generate synthetic image based on pose

_ 513

Generate synthetic image based on change in facial expression intensity

_ 514

Generate cropped image of entire image

_ 515

Generate training data

To 420

EP 3 324 333 A2

**FIG. 6**

# FIG. 7

710

Generate synthetic
image based on pose — 512

720

**FIG. 8**

Generate synthetic image based on change in facial expression intensity

513

810

821  0.5   822  0.65   0.8   823  0.95   824  1.010

# FIG. 9

910

Generate cropped image of entire image — 514

920

**FIG. 10**

**FIG. 11**

EP 3 324 333 A2

## FIG. 12

```
                    ┌──────────────┐
                    │    Start     │
                    └──────────────┘
                            │
                            ▼
        ┌───────────────────────────────────────────┐  ⌐ 1210
        │      Acquire input image including object   │
        └───────────────────────────────────────────┘
                            │
                            ▼
        ┌───────────────────────────────────────────┐  ⌐ 1220
        │   Calculate facial expression intensity of object │
        │ from input image based on facial expression recognition Model │
        └───────────────────────────────────────────┘
                            │
                            ▼
                    ┌──────────────┐
                    │     End      │
                    └──────────────┘
```

**FIG. 13**

EP 3 324 333 A2

# FIG. 14

1400

# FIG. 15

From 1220

Estimate facial expression and pose of object 1530

Provide feedback based on facial expression of object 1540

End

1541

1542

**FIG. 16**

<u>1600</u>

# FIG. 17

## 1700

**REFERENCES CITED IN THE DESCRIPTION**

**Patent documents cited in the description**

- KR 1020160155295